(19) **Europäisches Patentamt / European Patent Office / Office européen des brevets**

(11) **EP 4 405 569 B1**

(12) **FASCICULE DE BREVET EUROPEEN**

(45) Date de publication et mention de la délivrance du brevet:
**06.08.2025 Bulletin 2025/32**

(21) Numéro de dépôt: **22789280.9**

(22) Date de dépôt: **21.09.2022**

(51) Classification Internationale des Brevets (IPC):
**F02K 1/82** *(2006.01)*

(52) Classification Coopérative des Brevets (CPC):
**F01D 5/082; B22F 5/009; B33Y 80/00; F01D 5/081; F01D 9/065; F01D 25/12; F02K 1/827;** B22F 10/28; F05D 2230/31; F05D 2250/322; F05D 2250/323; F05D 2250/71; F05D 2250/711; F05D 2250/712; F05D 2250/713; (Cont.)

(86) Numéro de dépôt international:
**PCT/FR2022/051777**

(87) Numéro de publication internationale:
**WO 2023/047055 (30.03.2023 Gazette 2023/13)**

(54) **CARTER D'INJECTION D'AIR DE REFROIDISSEMENT POUR TURBINE DE TURBOMACHINE**

KÜHLLUFT-EINSPRITZGEHÄUSE FÜR EINE TURBOMASCHINENTURBINE

COOLING-AIR INJECTION CASING FOR A TURBOMACHINE TURBINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2021 FR 2110090**

(43) Date de publication de la demande:
**31.07.2024 Bulletin 2024/31**

(73) Titulaire: **SAFRAN AIRCRAFT ENGINES 75015 Paris (FR)**

(72) Inventeurs:
- **LEMONNIER, Jérôme Claude George 77550 MOISSY-CRAMAYEL (FR)**
- **BOISNAULT, Franck Davy 77550 MOISSY-CRAMAYEL (FR)**
- **VAN NOORT, Antoine Bruno 77550 MOISSY-CRAMAYEL (FR)**

(74) Mandataire: **Regimbeau 20, rue de Chazelles 75847 Paris Cedex 17 (FR)**

(56) Documents cités:
**WO-A1-2019/180365 FR-A1- 3 101 670 US-A1- 2020 240 279**

(52) Classification Coopérative des Brevets (CPC):
(Cont.)F05D 2260/607

## Description

## DOMAINE DE L'INVENTION

L'invention se situe dans le domaine de la ventilation d'une turbine de turbomachine, notamment la ventilation d'une turbine haute pression d'une turbomachine à double corps, telle qu'un turboréacteur d'avion.

Plus précisément, l'invention concerne un carter d'injection d'air de refroidissement du disque de rotor d'une turbine, notamment une turbine haute pression, d'une turbomachine.

## ETAT DE LA TECHNIQUE

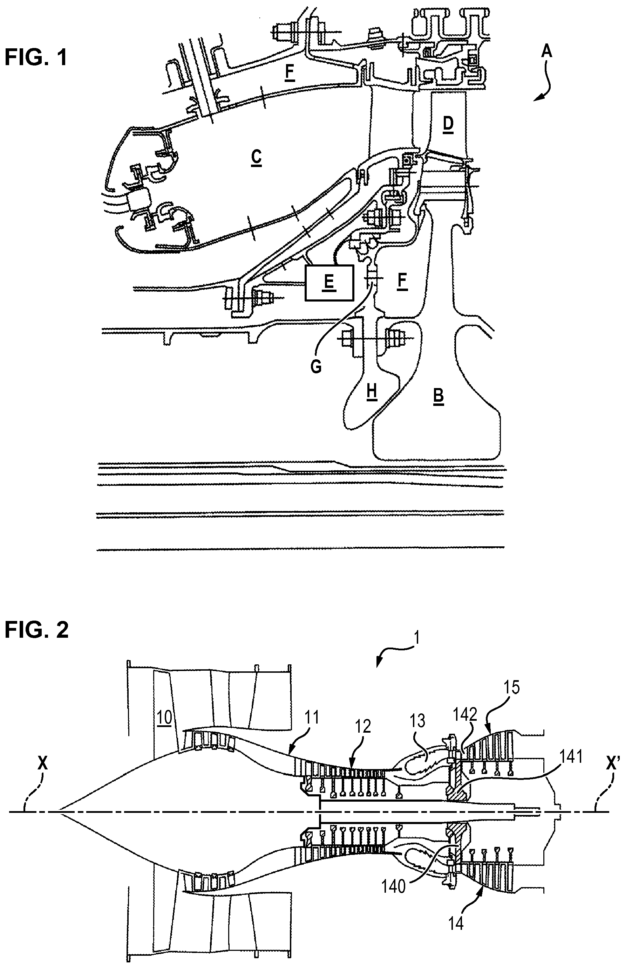

Une turbomachine à double corps comprend notamment une turbine haute-pression, qui est positionnée en sortie d'une chambre de combustion pour récupérer de l'énergie du flux de gaz de combustion et ainsi entraîner en rotation, un compresseur haute-pression, disposé en amont de ladite chambre de combustion et alimentant cette dernière en air sous pression (voir la figure 1 jointe).

Dans la suite de la description et des revendications, les termes « amont » et « aval » sont à prendre en considération par rapport au sens d'écoulement de l'air à l'intérieur de la turbine haute pression, ainsi qu'à l'intérieur du carter d'injection d'air de refroidissement conforme à l'invention.

Typiquement, et comme on peut le voir sur la figure 1 jointe qui illustre l'état de la technique, une turbine haute-pression A comprend un disque de rotor B, disposé en sortie de la chambre de combustion C et sur lequel sont montées des aubes de turbine D, entraînées en rotation par le flux de gaz éjecté par cette chambre de combustion.

Du fait des températures élevées atteintes par les gaz de combustion, le disque de rotor B, et les aubes de turbine D qu'il porte, sont soumis à d'importantes contraintes thermiques pouvant induire des dilatations. Pour limiter l'impact négatif de ces contraintes thermiques sur la durée de vie des aubes de turbine, ces dernières sont munies de circuits internes de refroidissement qui comprennent des conduits parcourus par de l'air de ventilation prélevé en fond de chambre de combustion.

Cet air de ventilation est généralement amené dans une cavité annulaire par des injecteurs d'air de ventilation E répartis circonférentiellement autour de l'axe longitudinal de la turbomachine. Les injecteurs E s'étendent sous la chambre de combustion et sont raccordés à un espace annulaire de contournement F, cet espace annulaire permettant d'acheminer de l'air de ventilation provenant du fond du compresseur vers la turbine de la turbomachine.

L'air de ventilation, sortant des injecteurs E, pénètre dans une cavité annulaire F située en amont du disque de rotor B, en traversant des orifices G formés dans un flasque d'étanchéité H disposé en amont du disque de rotor. La cavité F communique avec les circuits internes de refroidissement aménagés à l'intérieur des aubes de turbine.

On pourra se référer aux publications FR 2,841,591 et FR 2,937,371 qui décrivent des exemples d'une telle architecture de turbine haute-pression.

Deux paramètres aérodynamiques pilotent généralement la forme d'un injecteur :

le débit d'air prélevé qui est calibré par la section au col d'un injecteur, et
la vitesse tangentielle à la sortie de l'injecteur (ou plus généralement le coefficient d'entrainement K) de l'air qui intervient dans la température totale relative, qui est globalement la température totale vue par les rotors.

Ainsi, la température totale relative $T_{r,t,1}$ s'exprime comme suit :

$$T_{r,t,1} = T_{t,1} + \frac{(1-2K)\cdot(\Omega_{rotor}\cdot r)^2}{2C_p},$$

$$\text{avec } K = \frac{V_{\theta,air}}{V_{\theta,rotor}} = \frac{V_{\theta,1}}{\Omega_{rotor}\cdot r}$$

où

$T_{t,1}$ désigne la température totale absolue en Kelvin K
$\Omega_{rotor}$ désigne la vitesse de rotation du rotor en rad/s
r désigne le rayon par rapport à l'axe moteur en m
$C_p$ désigne la capacité thermique massique à pression constante (J/Kg/K)
$V_{\theta,air}$ désigne la vitesse tangentielle de l'air au rayon r considéré en m/s
$V_{\theta,rotor} = \Omega_{rotor} {}^*r$ désigne la vitesse tangentielle du rotor au rayon r considéré en m/s.

Plus le ratio vitesse tangentielle de l'air / coefficient d'entrainement K est élevé, plus la température totale relative $T_{r,t,1}$ diminue.

Généralement, les injecteurs sont axiaux (c'est-à-dire que l'air y circule sensiblement parallèlement à un axe de rotation de la turbomachine) et sont constitués, soit d'une couronne de trous indépendants inclinés à angle fixe, soit d'une rangée de pales statiques, ayant pour conséquence une masse importante de l'ensemble.

Cette architecture a pour avantage de prélever une faible puissance sur le rotor et de ne pas trop favoriser une augmentation de température dans la turbine.

Néanmoins, cette architecture nécessite d'être améliorée pour mieux maitriser les étanchéités situées à proximité de l'injecteur et garantir une bonne maîtrise du débit d'air, ainsi qu'une bonne répartition de la ventilation.

On connaît déjà d'après les documents FR 3101 670 et US 2020/0240279 des carters d'injection d'air de refroidissement munis de canaux d'injection d'air, mais ces derniers ne s'étendent pas dans un plan axial mais au contraire dans un plan perpendiculaire à l'axe longitudinal du carter. On connait également d'après le document WO 2019/ 180365, un support de palier comprenant un conduit coudé mais qui ne présente pas d'ondulations comme dans la présente invention et qui sert uniquement à l'alimentation en huile du palier.

**EXPOSE DE L'INVENTION**

Un but de l'invention est d'améliorer les aspects suivants :

- Amélioration de la circulation d'air dans les injecteurs afin de maximiser la vitesse de celui-ci au col des injecteurs, sans introduction de perte de charge, tout en diminuant les risques de décollements d'air, résultant ainsi en une meilleure robustesse du dispositif quel que soit le point de fonctionnement de la turbine,
- Diminution des débits de fuite à travers les dispositifs d'étanchéité placés à proximité des injecteurs, du fait que la sortie de l'injecteur est placée à un rayon plus faible que l'entrée de l'injecteur
- Réduction significative de la masse du carter d'injection d'air par rapport aux carters d'injection d'air conventionnels (d'au moins 50%).

A cet effet, l'invention concerne un carter d'injection d'air de refroidissement d'un disque aubagé de rotor d'une turbine, notamment haute pression, d'une turbomachine, le carter s'étendant autour d'un axe longitudinal et étant traversé par au moins un canal formant un injecteur d'air, le canal comprenant une embouchure d'entrée et une embouchure de sortie.

Conformément à l'invention, le canal comprend un tronçon primaire qui s'étend dans un plan axial depuis l'embouchure d'entrée jusqu'à un coude et un tronçon secondaire qui s'étend depuis ce coude jusqu'à l'embouchure de sortie, le tronçon secondaire présentant une variation progressive de son orientation selon une composante tangentielle entre la section du coude et la section de sortie de l'embouchure de sortie, le canal présente une réduction de section entre la section d'entrée de l'embouchure d'entrée et la section d'un col, et le canal présente au moins une ondulation dans son tronçon primaire, de sorte à ce que l'embouchure de sortie est située plus près de l'axe longitudinal que l'embouchure d'entrée.

Grâce à ces caractéristiques de l'invention, et notamment grâce à la combinaison de la réduction de section entre l'embouchure d'entrée et le col, de son orientation selon une composante tangentielle et du fait que l'embouchure de sortie est située à un niveau radial plus faible que l'embouchure d'entrée, on obtient une synergie dans l'amélioration du refroidissement. En effet, la réduction de section et l'orientation tangentielle accroit la composante de vitesse tangentielle de l'air injecté et le fait que l'embouchure de sortie soit plus proche de l'axe longitudinal permet d'injecter l'air à un endroit où la vitesse tangentielle de la turbine haute pression est plus faible.

Par ailleurs, l'ondulation permet de limiter les pertes de charge dans le canal et d'éviter que l'air ne ralentisse à l'intérieur de celui-ci.

Selon d'autres caractéristiques avantageuses et non limitatives de l'invention, prises seules ou en combinaison :

- ladite au moins une ondulation du canal comprend de l'amont vers l'aval par rapport au sens de circulation de l'air dans le canal, une première partie courbe dont la concavité est orientée vers l'axe longitudinal puis une deuxième partie courbe dont la convexité est orientée vers l'axe longitudinal ;

- l'embouchure de sortie du canal présente une section de sortie qui s'étend tangentiellement et dans un plan perpendiculaire à l'axe longitudinal ;

- le coude est orienté de sorte à ce que le flux d'air sortant de l'embouchure de sortie circule tangentiellement dans le même sens que le sens de rotation du disque de rotor destiné à être refroidi ;

- le rapport entre la section d'entrée de l'embouchure d'entrée et la section du col est supérieur ou égal à 2, de préférence est compris entre 2 et 10 ;

- l'évolution de la section du canal entre l'embouchure d'entrée et le col est strictement monotone décroissante ;

- le carter comprend une paroi extérieure annulaire évasée de l'amont vers l'aval, une paroi radialement intérieure qui s'étend vers l'aval depuis ladite paroi extérieure et qui supporte un dispositif d'étanchéité radialement interne, une paroi radialement extérieure qui s'étend depuis ladite paroi extérieure, et une paroi d'extrémité qui joint les extrémités aval respectives de la paroi radialement intérieure et de la paroi radialement extérieure, cette paroi d'extrémité s'étendant dans un plan perpendiculaire à l'axe longitudinal, la paroi extérieure annulaire évasée, la paroi radialement intérieure, la paroi radialement extérieure et la paroi d'extrémité délimitent ensemble une cavité intérieure annulaire, le canal est disposé au moins en partie dans cette cavité intérieure et l'embouchure de sortie du canal est formée dans la paroi d'extrémité ;

- l'embouchure d'entrée est formée dans la paroi extérieure annulaire évasée et est de forme rectangulaire ;

- l'embouchure d'entrée du canal comprend un tube de section circulaire, qui fait saillie axialement et vers l'amont depuis ladite paroi extérieure annulaire évasée ;

- le carter comprend une paroi annulaire qui s'étend axialement vers l'aval depuis ladite paroi radialement extérieure et qui supporte un dispositif d'étanchéité radialement externe ;

- ladite paroi d'extrémité comprend au moins un trou de dépoussiérage ;

- l'embouchure de sortie est de forme rectangulaire.

L'invention concerne également une turbine haute pression de turbomachine comprenant au moins un disque aubagé de rotor muni d'un moyeu. Conformément à l'invention, cette turbine comprend un carter d'injection d'air de refroidissement tel que précité et le carter est disposé en amont du disque de rotor de sorte que ces embouchures de sortie soient situées en face du moyeu.

L'invention concerne également une turbomachine comprenant au moins un carter d'injection d'air de refroidissement tel que précité.

L'invention concerne également un procédé de fabrication d'un carter d'injection d'air de refroidissement tel que précité dans lequel ledit carter d'injection d'air de refroidissement est réalisé par fabrication additive.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

[Fig. 1] la figure 1 est une vue en coupe axiale d'une partie d'une turbomachine de l'état de la technique munie d'un circuit de refroidissement du rotor.

[Fig. 2] la figure 2 est une vue en coupe axiale d'une turbomachine conforme à l'invention.

[Fig. 3] la figure 3 est une vue en perspective d'une portion angulaire du carter annulaire injecteur d'air de refroidissement conforme à l'invention.

[Fig. 4] la figure 4 est une vue partielle en perspective et en coupe axiale de l'un des injecteurs du carter conforme à l'invention.

[Fig. 5] la figure 5 est une vue en coupe et de dessus de l'un des injecteurs du carter conforme à l'invention.

[Fig. 6] la figure 6 est une vue en perspective d'une portion angulaire du carter annulaire injecteur d'air de refroidissement conforme à l'invention, représentant un premier mode de réalisation de l'embouchure d'entrée des injecteurs.

[Fig. 7] la figure 7 est une vue en perspective d'une portion angulaire du carter annulaire injecteur d'air de refroidissement conforme à l'invention, représentant un deuxième mode de réalisation de l'embouchure d'entrée des injecteurs.

[Fig. 8] la figure 8 est une vue en perspective d'une portion angulaire du carter conforme à l'invention, le carter étant coupé selon un plan de coupe axial.

[Fig. 9] la figure 9 est une vue de détail d'une portion du carter.

[Fig. 10] la figure 10 est une vue représentant une partie du carter conforme à l'invention et des supports qui sont utilisés pour sa fabrication par fabrication additive.

[Fig. 11] la figure 11 est une vue de détail représentant une partie du carter et de l'un des supports de la figure 10.

[Fig. 12] la figure 12 est une vue en perspective d'une portion angulaire du carter annulaire injecteur d'air de refroidissement conforme à l'invention et d'une portion angulaire d'un disque de rotor à refroidir.

## DESCRIPTION DETAILLEE DE L'INVENTION

L'invention s'applique à une turbine de turbomachine, notamment à une turbine haute-pression d'une turbomachine à double corps, telle qu'un turboréacteur d'avion. Une telle turbomachine est représentée sur la figure 2.

Sur cette figure, on peut voir que la turbomachine 1 s'étend autour d'un axe longitudinal X-X'. Cette turbomachine 1 comprend de gauche à droite, c'est-à-dire de l'amont vers l'aval par référence au flux de gaz qui s'y écoule en fonctionnement : une soufflante 10, un compresseur basse pression 11, un compresseur haute pression 12, une chambre de combustion 13, une turbine haute pression 14 et une turbine basse pression 15.

La turbine haute pression 14 comprend au moins un disque de rotor 140 présentant un moyeu 141 et une pluralité d'aubes 142 fixées à la périphérie de ce moyeu.

Le disque de rotor 140 est centré sur l'axe X-X'.

Dans la suite de la description et des revendications, le terme « axial » désigne la direction selon l'axe X-X' et le terme « radial » désigne une direction perpendiculaire à l'axe X-X'.

Un mode de réalisation possible du carter d'injection d'air de refroidissement 2 conforme à l'invention va maintenant être décrit. Il présente une forme de révolution, d'axe X-X'.

Le carter 2 est traversé par au moins un canal 20 qui forme un injecteur d'air, de préférence par plusieurs canaux 20.

Chaque canal 20 présente une embouchure d'entrée 201 et une embouchure de sortie 202. L'embouchure d'entrée 201 permet de prélever une partie de l'air se trouvant sous la chambre de combustion pour refroidir le rotor.

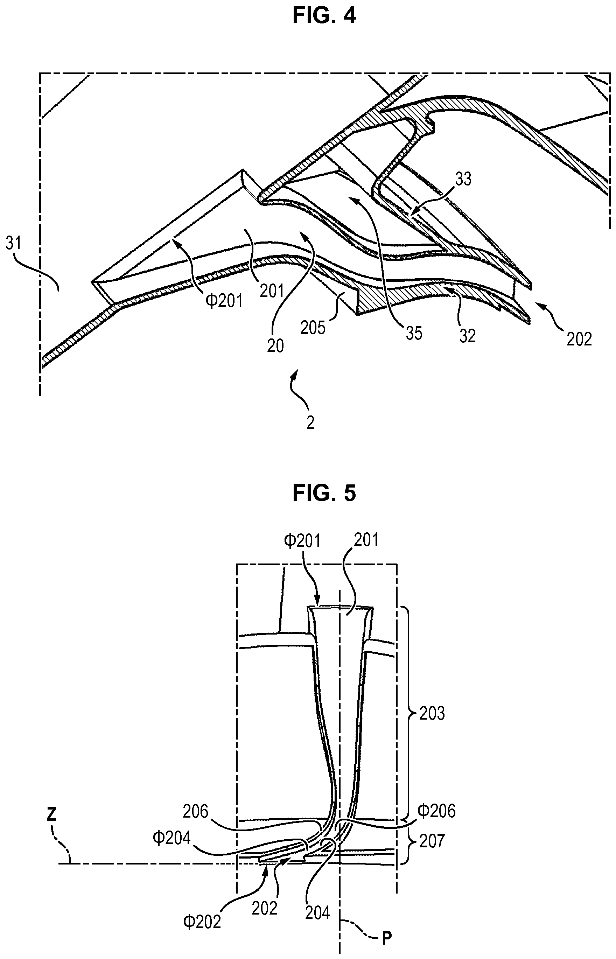

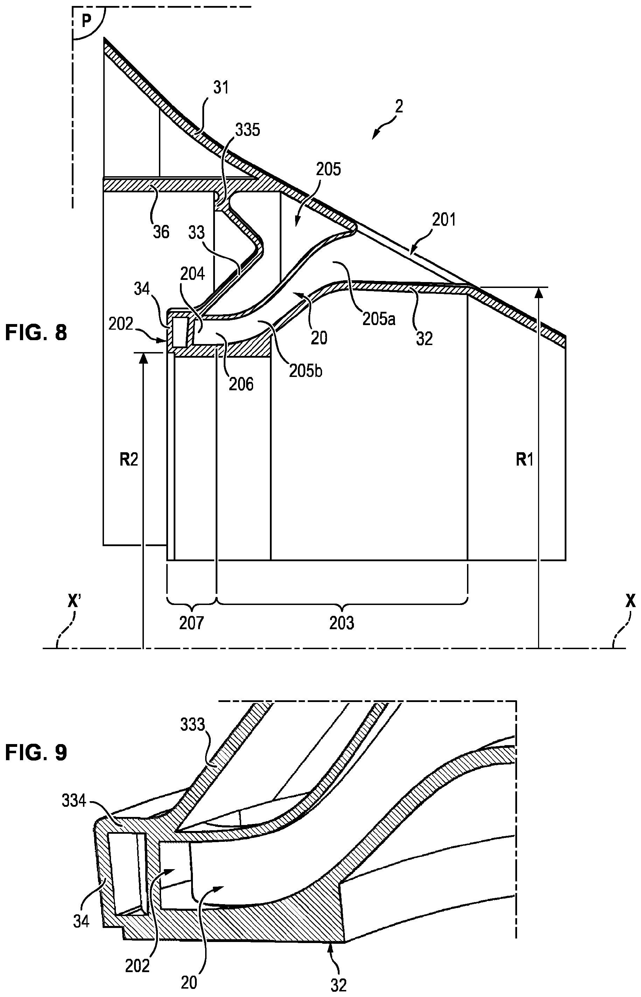

Comme cela apparait mieux sur les figures 5 et 8, chaque canal 20 comprend successivement de l'amont vers l'aval un tronçon primaire 203 puis un tronçon secondaire 207.

Le tronçon primaire 203 s'étend depuis l'embouchure d'entrée 201 jusqu'à un coude 206 dans un plan axial P, ce plan P incluant l'axe longitudinal X-X'.

Le tronçon secondaire 207 s'étend depuis ce coude 206 jusqu'à l'embouchure de sortie 202.

Le tronçon secondaire 207 présente une variation progressive de son orientation selon une composante tangentielle Z entre la section $\Phi206$ du coude 206 et la section de sortie $\Phi202$ de l'embouchure de sortie 202. Par « variation progressive d'orientation », on entend une variation de l'orientation d'un vecteur normal au centre d'une section du canal 20 et ayant pour origine le centre de ladite section.

De préférence, la section de sortie $\Phi202$ de l'embouchure de sortie 202 de chaque canal 20 s'étend tangentiellement dans un plan P1 perpendiculaire à l'axe longitudinal X-X'. De plus, le coude 206 est avantageusement orienté de sorte que le flux d'air sortant de l'embouchure de sortie 202 circule tangentiellement dans le même sens que le sens de rotation du disque de rotor qui lui fait face.

Comme on le voit sur la figure 8, l'embouchure de sortie 202 est située plus près de l'axe longitudinal X-X' que l'embouchure d'entrée 201. En d'autres termes, le rayon R1 entre le point de l'embouchure d'entrée 201 situé le plus radialement à l'intérieur est supérieur au rayon R2 du point de l'embouchure de sortie 202 situé le plus radialement à l'intérieur. L'air prélevé est ainsi amené à un rayon R2 plus faible en augmentant ainsi le coefficient d'entrainement de l'air, ce qui permet de refroidir une plus grande surface du rotor et ce qui permet également une meilleure compression de l'air dans le circuit de refroidissement du rotor.

Chaque canal 20 présente une réduction de section entre la section d'entrée $\Phi201$ de l'embouchure d'entrée 201 et la section $\Phi204$ d'un col 204. Le col 204 correspond ainsi au point du canal 20 qui présente la plus faible section transversale.

De préférence, le rapport entre la section d'entrée $\Phi201$ de l'embouchure d'entrée 201 et la section $\Phi204$ du col 204 est supérieur ou égal à 2. De préférence encore, ce rapport est compris entre 2 et 10.

De plus, l'évolution de la section du canal 20 entre l'embouchure d'entrée 201 et le col 204 est de préférence strictement monotone décroissante.

Cette réduction de section permet d'accroître la vitesse de l'air dans le canal

Comme on peut le voir sur la figure 5, de façon avantageuse, le coude 206 est en amont du col 204.

En outre, chaque canal 20 présente au moins une ondulation 205 dans le tronçon primaire 203. Cette ondulation 205 s'étend dans le plan axial P.

Par « ondulation », on entend le fait d'avoir deux portions courbes successives d'orientations respectives opposées. Ainsi, le canal 20 comprend de l'amont vers l'aval c'est-à-dire de la droite vers la gauche de la figure 8, successivement une première partie courbe 205a dont la concavité est orientée vers l'axe longitudinal X-X' puis une deuxième partie courbe 205b dont la convexité est orientée vers l'axe longitudinal (X-X').

L'ondulation 205 permet de limiter les pertes de charge dans le canal et d'empêcher une diminution de la vitesse de l'air qui y circule.

De façon avantageuse, le carter 2 comprend au moins sept canaux 20 formant injecteurs afin de minimiser les hétérogénéités aérodynamiques dans le circuit de refroidissement du rotor.

Le carter 2 peut présenter différentes formes dont un mode de réalisation particulier va maintenant être décrit.

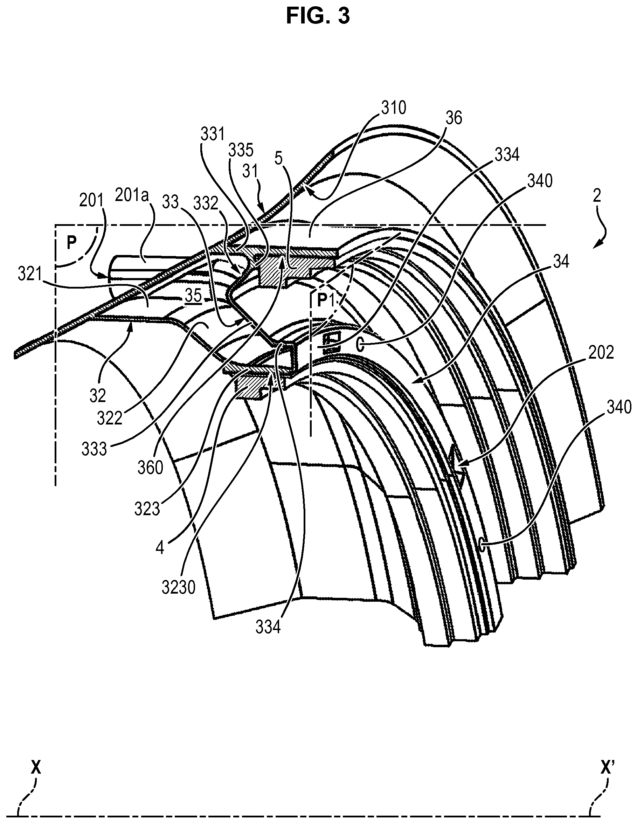

Comme cela apparaît mieux sur la figure 3, le carter 2 comprend une paroi extérieure annulaire 31, évasée de l'amont vers l'aval, une paroi radialement intérieure 32, une paroi radialement extérieure 33, une paroi d'extrémité 34 et une paroi axiale 36. Ces différentes parois sont annulaires et centrées sur l'axe X-X'.

La paroi extérieure annulaire 31 a pour fonction de séparer la cavité située sous la chambre de combustion et les cavités destinées à refroidir le rotor haute pression.

La paroi radialement intérieure 32 s'étend vers l'aval depuis la paroi extérieure 31. Plus précisément, cette paroi 32 comprend une première partie 321, qui s'étend selon une direction axiale depuis la face intérieure 310 de la paroi extérieure annulaire 31, une deuxième partie 322, qui est inclinée depuis l'extrémité aval de la première partie 321 vers l'aval et vers un point situé plus près de l'axe longitudinal X-X' que ne l'est la première partie 321 et enfin une troisième partie 323, qui s'étend selon une direction axiale et vers l'aval depuis ladite deuxième partie 322.

Comme cela apparait mieux sur la figure 8, la partie radialement intérieure du canal 20 épouse sensiblement la forme de la paroi radialement intérieure 32.

La paroi radialement extérieure 33 s'étend vers l'aval depuis la paroi extérieure 31. Plus précisément, cette paroi 33 comprend une première partie 331, qui s'étend selon une direction axiale depuis la face intérieure 310 de la paroi extérieure annulaire 31, une deuxième partie 332, qui est inclinée depuis l'extrémité aval de la première partie 331 vers l'amont et vers un point situé plus près de l'axe longitudinal X-X' que ne l'est la première partie 331, une troisième partie 333 qui est inclinée depuis la deuxième partie 332 vers l'aval et vers un point situé encore plus près de l'axe longitudinal X-X' que ne l'est la deuxième partie 332 et enfin une quatrième partie 334, qui s'étend selon direction axiale et vers l'aval depuis la troisième partie 333.

La paroi radialement extérieure 33 a pour fonction de séparer la cavité de mélange situé en sortie des injecteurs en deux plus petites cavités, afin de conserver la vitesse importante de l'air en sortie des injecteurs (canaux 20) et donc une efficacité de refroidissement du rotor haute pression acceptable.

La paroi d'extrémité 34 joint les extrémités aval respectives de la paroi radialement intérieure 32 et de la paroi radialement extérieure 33, plus précisément les extrémités aval respectives de la troisième partie 323 et de la quatrième partie 334. Cette paroi d'extrémité 34 s'étend dans un plan P1 perpendiculaire à l'axe longitudinal X-X'.

La paroi extérieure annulaire évasée 31, la paroi radialement intérieure 32, la paroi radialement extérieure 33 et la paroi d'extrémité 34 délimitent ensemble une cavité intérieure annulaire 35.

La paroi axiale 36 s'étend axialement vers l'aval depuis l'extrémité aval de la première partie 331 de la paroi radialement extérieure 33 dans le prolongement de celle-ci.

De préférence, la paroi radialement intérieure 32 et plus précisément sa troisième partie 323 supporte un dispositif d'étanchéité radialement interne 4. Ce dispositif d'étanchéité 4 est fixé sur la face radialement interne 3230 de la troisième partie 323.

De préférence également, la paroi axiale 36 supporte un dispositif d'étanchéité radialement externe 5. Ce dispositif d'étanchéité 5 est fixé sur la face radialement interne 360 de la paroi axiale 36.

De préférence, la paroi radialement extérieure 33 est munie d'une nervure annulaire 335 qui s'étend axialement depuis la deuxième partie 332 et qui permet de caler axialement le dispositif d'étanchéité radialement externe 5.

Le dispositif d'étanchéité 4 a pour principale fonction de limiter le débit de fuite provenant de la sortie du compresseur haute pression et se dirigeant vers les cavités de la turbine haute pression. Le dispositif 5 permet de calibrer le débit provenant de l'injecteur et du dispositif 4 afin de pouvoir étancher et refroidir suffisamment la cavité située entre le distributeur haute pression et le disque de rotor de la turbine haute pression.

Les différents canaux 20 sont formés à l'intérieur de la cavité 35.

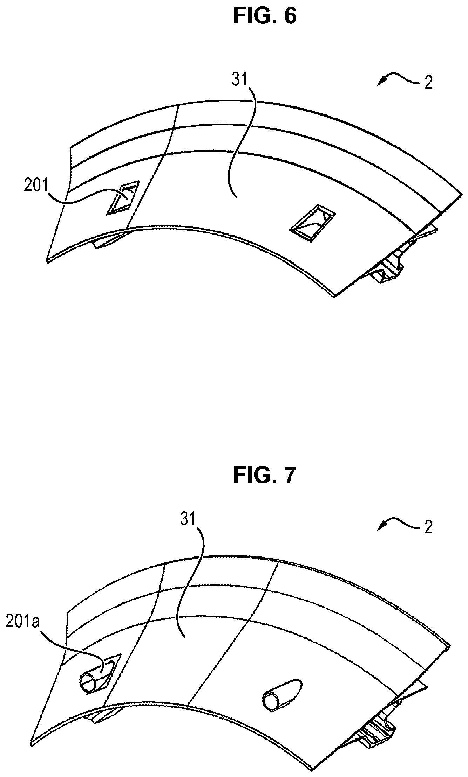

Comme cela apparaît mieux sur les figures 6 et 7, l'embouchure d'entrée 201 de chaque canal 20 débouche au travers de la paroi extérieure annulaire 31.

Selon un premier mode de réalisation représenté sur la figure 6, cette embouchure d'entrée 201 présente une forme rectangulaire.

Selon un deuxième mode de réalisation représenté sur la figure 7, cette embouchure d'entrée comprend un tube 201a, qui s'étend axialement et en saillie vers l'amont depuis la paroi extérieure évasée 31. Ainsi, dans le cas où la turbine intègre un sous-ensemble venant obstruer un ou plusieurs injecteurs, connu sous la terminologie anglaise de « *variable cooling* » ou un sous-ensemble mécanique prélevant de l'air pour le refroidir dans un échangeur thermique puis le renvoyant vers les injecteurs, connu sous la terminologie anglaise de « *cooled cooling* », le tube 201a est mieux adapté car il permet d'y insérer les tubes associés aux sous-ensembles précités.

L'embouchure de sortie 202 de chaque canal 20 débouche au travers de la paroi d'extrémité 34. De préférence, cette embouchure de sortie 202 est de forme rectangulaire.

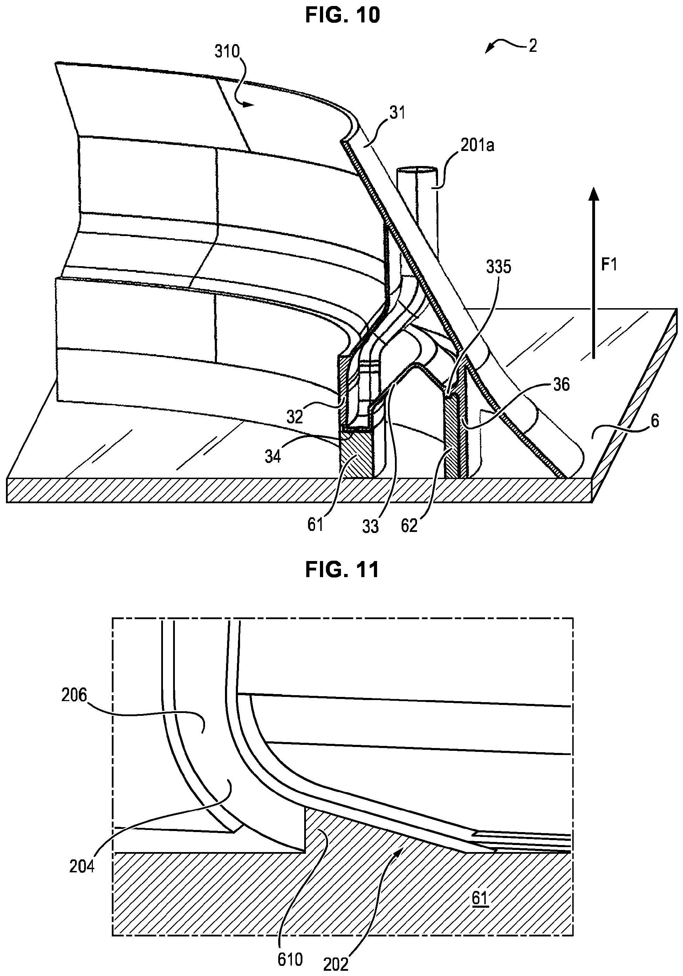

Conformément à l'invention, ce carter d'injection d'air de refroidissement 2 peut être fabriqué par un procédé de fabrication additive. Ce procédé va maintenant être décrit plus en détail en liaison avec les figures 10 et 11.

Lorsqu'il est fabriqué par fabrication additive, ce carter 2 présente l'avantage d'être d'une seule pièce (c'est-à-dire monobloc).

Un tel procédé de fabrication additive peut par exemple être un procédé de fusion laser sur lit de poudre ou de fusion par canon à électrons.

Ces procédés consistent à déposer des couches successives de la poudre du matériau constituant le carter à fabriquer, ici une poudre métallique, sur un plateau de fabrication horizontal 6 et à faire fusionner chaque couche de poudre avec la précédente, selon le schéma de la structure du carter 2 à obtenir, par un apport d'énergie, à savoir par un faisceau laser ou un canon à électrons.

Le sens d'impression de la pièce est représenté par la flèche F1.

L'impression s'effectue en commençant par l'extrémité aval du carter 2 (située en bas sur la figure 10), afin de minimiser le nombre de supports d'impression nécessaires et le risque de déformation des parois trop inclinées.

Deux supports sont nécessaires à la fabrication.

Un premier support 61 permet de supporter la paroi d'extrémité 34 et les parois 32 et 33. Ce support 61 présente des éléments saillants 610 (autant que de canaux 20 à former). Chaque élément saillant 610 de section sensiblement triangulaire permet de soutenir la paroi la plus inclinée du canal 20, située entre le col 204 et l'embouchure de sortie 202.

Un deuxième support de 62 permet de supporter la nervure annulaire 335 qui se trouve à l'horizontale par rapport au plateau 6 pendant la fabrication.

On notera que lorsque le carter 2 est fabriqué par un procédé de fabrication additive, les parties 322, 332 et 333 des parois 32, respectivement 33 sont inclinées d'un angle qui n'excède pas 40° par rapport à la verticale, afin de pouvoir être fabriquées sans support.

Une fois la fabrication additive terminée, il suffit de procéder à un usinage afin de retirer les supports 61 et 62 du carter 2 obtenu.

Enfin, on notera qu'un trou de dépoussiérage 340, formé dans la paroi d'extrémité 34 et débouchant à l'intérieur de la cavité 35 permet d'évacuer la poudre métallique restante dans cette cavité et permet de pressuriser cette même cavité pendant l'utilisation du carter 2. Le nombre de trous 340 est identique au nombre de canaux 20.

Enfin, les surfaces fonctionnelles, c'est-à-dire les faces internes des canaux 20 formant injecteurs et les surfaces qui seront en contact avec d'autres pièces sont polies.

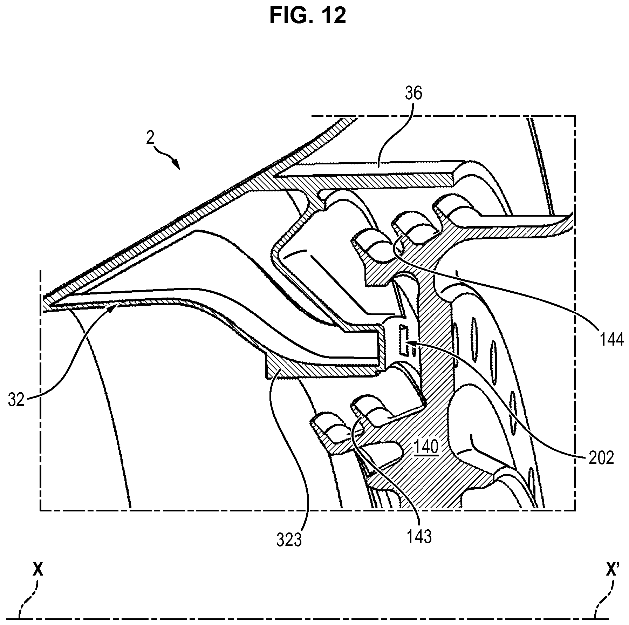

Le carter 2 est ensuite positionné en regard du disque de rotor 140, comme représenté sur la figure 12. Ce positionnement est réalisé de sorte que le dispositif d'étanchéité radialement interne 4 (visible uniquement sur la figure 3) et qui est fixé sur la troisième partie 323 de la paroi 32 soit en regard des languettes d'étanchéité radialement interne 143 du disque 140 et que le dispositif d'étanchéité radialement externe 5 (visible uniquement sur la figure 3) et qui est fixé sur la paroi axiale 36 soit en regard des languettes d'étanchéité radialement externe 144 du disque 140.

L'invention présente de nombreux avantages.

La diminution de la section transversale et l'inclinaison des canaux 20 formant les injecteurs d'air permet d'obtenir une vitesse tangentielle au niveau de l'embouchure de sortie 202 plus importante qu'avec les injecteurs conventionnels utilisés actuellement (ensemble de pales). Une vitesse tangentielle plus importante entraîne une température totale relative de l'air de refroidissement plus faible et donc un meilleur refroidissement des disques de rotor.

On constate également avec ce carter, une diminution des fuites à travers les dispositifs d'étanchéité 4 et 5.

En effet, la section de fuite à travers les dispositifs 4 et 5 est définie de la manière suivante : S = 2 * R * j où R est le rayon du dispositif d'étanchéité 4 ou 5 par rapport à l'axe moteur et j le jeu entre le stator et le sommet des léchettes du dispositif d'étanchéité.

Le débit de fuite Q est : Q = ρ*V*S où ρ est la masse volumique, V la vitesse de l'air à travers le dispositif d'étanchéité.

Comme la sortie des canaux est située à un rayon plus faible (comparé aux injecteurs droits ou à rayon constant par rapport à l'axe moteur), les dispositifs 4 et 5 sont eux également situé à un R plus faible, donc S diminue et donc le débit de fuite Q diminue également.

Enfin, la masse de l'ensemble du carter est diminuée de plus de 50 % par rapport aux carters d'injecteurs classiques.

**Revendications**

1. Carter (2) d'injection d'air de refroidissement d'un disque aubagé de rotor d'une turbine, notamment haute pression, d'une turbomachine,

   le carter s'étendant autour d'un axe longitudinal (X-X') et étant traversé par au moins un canal (20) formant un injecteur d'air, le canal (20) comprenant une embouchure d'entrée (201) et une embouchure de sortie (202), **caractérisé en ce que** le canal (20) comprend un tronçon primaire (203) qui s'étend dans un plan axial (P) depuis l'embouchure d'entrée (201) jusqu'à un coude (206) et un tronçon secondaire (207) qui s'étend depuis ce coude (206) jusqu'à l'embouchure de sortie (202), le tronçon secondaire (207) présentant une variation progressive de son orientation selon une composante tangentielle (Z) entre la section (Φ206) du coude (206) et la section de sortie (Φ202) de l'embouchure de sortie (202), **en ce que** le canal (20) présente une réduction de section entre la section d'entrée (Φ201) de l'embouchure d'entrée (201) et la section (Φ204) d'un col (204), et **en ce que** le canal (20) présente au moins une ondulation (205) dans son tronçon primaire (203), de sorte à ce que l'embouchure de sortie (202) est située plus près de l'axe longitudinal (X-X') que l'embouchure d'entrée (201).

2. Carter (2) selon la revendication 1, **caractérisé en ce que** ladite au moins une ondulation (205) du canal (20) comprend de l'amont vers l'aval par rapport au sens de circulation de l'air dans le canal (20), une première partie courbe (205a) dont la concavité est orientée vers l'axe longitudinal (X-X') puis une deuxième partie courbe (205b) dont la convexité est orientée vers l'axe longitudinal (X-X').

3. Carter (2) selon la revendication 1 ou 2, **caractérisé en ce que** l'embouchure de sortie (202) du canal (20) présente une section de sortie (Φ202) qui s'étend tangentiellement et dans un plan (P1) perpendiculaire à l'axe longitudinal (X-X').

4. Carter (2) selon la revendication 3, **caractérisé en ce que** le coude (206) est orienté de sorte à ce que le flux d'air sortant de l'embouchure de sortie (202) circule tangentiellement dans le même sens que le sens de rotation du disque de rotor destiné à être refroidi.

5. Carter (2) selon l'une quelconque des revendications précédentes, **caractérisé en ce que** le rapport entre la section d'entrée (Φ201) de l'embouchure d'entrée (201) et la section (Φ204) du col (204) est supérieur ou égal à 2, de préférence est compris entre 2 et 10.

6. Carter (2) selon l'une quelconque des revendications précédentes, **caractérisé en ce que** l'évolution de la section du canal (20) entre l'embouchure d'entrée (201) et le col (204) est strictement monotone décroissante.

7. Carter (2) selon l'une quelconque des revendications précédentes, **caractérisé en ce qu'**il comprend :

    - une paroi extérieure annulaire (31) évasée de l'amont vers l'aval,
    - une paroi radialement intérieure (32) qui s'étend vers l'aval depuis ladite paroi extérieure (31) et qui supporte un dispositif d'étanchéité radialement interne (4),
    - une paroi radialement extérieure (33) qui s'étend depuis ladite paroi extérieure (31), et
    - une paroi d'extrémité (34) qui joint les extrémités aval respectives de la paroi radialement intérieure (32) et de la paroi radialement extérieure (33), cette paroi d'extrémité (34) s'étendant dans un plan (P1) perpendiculaire à l'axe longitudinal (X-X'),

    **en ce que** la paroi extérieure annulaire évasée (31), la paroi radialement intérieure (32), la paroi radialement extérieure (33) et la paroi d'extrémité (34) délimitent ensemble une cavité intérieure annulaire (35), **en ce que** le canal (20) est disposé au moins en partie dans cette cavité intérieure (35), et **en ce que** l'embouchure de sortie (202) du canal (20) est formée dans la paroi d'extrémité (34).

8. Carter (2) selon la revendication 7, **caractérisé en ce que** l'embouchure d'entrée (201) est formée dans la paroi extérieure annulaire évasée (31) et est de forme rectangulaire.

9. Carter (2) selon la revendication 7, **caractérisé en ce que** l'embouchure d'entrée (201) du canal (20) comprend un tube (201a) de section circulaire, qui fait saillie axialement et vers l'amont depuis ladite paroi extérieure annulaire évasée (31).

10. Carter (2) selon l'une des revendications 7 à 9, **caractérisé en ce qu'**il comprend une paroi annulaire (36) qui s'étend axialement vers l'aval depuis ladite paroi radialement extérieure (33) et qui supporte un dispositif d'étanchéité radialement externe (5).

11. Carter (2) selon l'une des revendications 7 à 10, **caractérisé en ce que** ladite paroi d'extrémité (34) comprend au moins un trou de dépoussiérage (340).

12. Carter (2) selon l'une quelconque des revendications précédentes, **caractérisé en ce que** l'embouchure de sortie (202) est de forme rectangulaire.

13. Turbine haute pression (14) de turbomachine (1) comprenant au moins un disque aubagé de rotor (140) muni d'un moyeu (141), **caractérisée en ce qu'**elle comprend un carter d'injection d'air de refroidissement (2) selon l'une quelconque des revendications précédentes et **en ce que** le carter (2) est disposé en amont du disque de rotor (140) de sorte que ces embouchures de sortie (202) soient situées en face du moyeu (141).

14. Turbomachine (1) **caractérisée en ce qu'**elle comprend au moins un carter d'injection d'air de refroidissement (2) selon l'une quelconque des revendications 1 à 12.

15. Procédé de fabrication d'un carter d'injection d'air de refroidissement (2) selon l'une quelconque des revendications 1 à 12, dans lequel ledit carter d'injection d'air de refroidissement (2) est réalisé par fabrication additive.

**Patentansprüche**

1. Gehäuse (2) zum Einleiten von Luft zum Kühlen einer Rotorschaufelscheibe einer Turbine, insbesondere einer Hochdruckturbine, einer Turbomaschine,

    wobei sich das Gehäuse um eine Längsachse (X-X') erstreckt und von mindestens einem Kanal (20) durchquert wird, der eine Luftdüse bildet, wobei der Kanal (20) eine Einlassöffnung (201) und eine Auslassöffnung (202) umfasst, **dadurch gekennzeichnet, dass** der Kanal (20) einen Primärabschnitt (203) umfasst, der sich in einer axialen Ebene (P) ab der Einlassöffnung (201) bis zu einer Krümmung (206) erstreckt, und einen Sekundärabschnitt (207), der sich ab dieser Krümmung (206) bis zur Auslassöffnung (202) erstreckt, wobei der Sekundärabschnitt (207) eine allmähliche Änderung seiner Ausrichtung gemäß einer tangentialen Komponente (Z) zwischen dem Querschnitt (Φ206) der Krümmung (206) und dem Auslassquerschnitt (Φ202) der Auslassöffnung (202) aufweist, dass der Kanal (20) eine Querschnittsverringerung zwischen dem Einlassquerschnitt (Φ201) der Einlassöffnung (201) und dem Querschnitt (Φ204) eines Halses (204) aufweist, und dass der Kanal (20) mindestens eine Welligkeit (205) in seinem Primärabschnitt (203) aufweist, so dass sich die Auslassöffnung (202) näher an der Längsachse (X-X') befindet als die Einlassöffnung (201).

2. Gehäuse (2) nach Anspruch 1, **dadurch gekennzeichnet, dass** die mindestens eine Welligkeit (205) des Kanals (20) von stromaufwärts nach stromabwärts in Bezug auf die Strömungsrichtung der Luft im Kanal (20) einen ersten gekrümmten Teil (205a) umfasst, dessen Konkavität zur Längsachse (X-X') hin ausgerichtet ist, und anschließend einen zweiten gekrümmten Teil (205b), dessen Konvexität zur Längsachse (X-X') hin ausgerichtet ist.

3. Gehäuse (2) nach Anspruch 1 oder 2, **dadurch gekennzeichnet, dass** die Auslassöffnung (202) des Kanals (20) einen Auslassquerschnitt (Φ202) aufweist, der sich tangential und in einer Ebene (P1) senkrecht zur Längsachse (X-X') erstreckt.

4. Gehäuse (2) nach Anspruch 3, **dadurch gekennzeichnet, dass** die Krümmung (206) derart ausgerichtet ist, dass der aus der Auslassöffnung (202) austretende Luftstrom tangential in derselben Richtung wie die Drehrichtung der zu kühlenden Rotorscheibe strömt.

5. Gehäuse (2) nach einem der vorstehenden Ansprüche, **dadurch gekennzeichnet, dass** das Verhältnis zwischen dem Einlassquerschnitt (Φ201) der Einlassöffnung (201) und dem Querschnitt (Φ204) des Halses (204) größer oder gleich 2 ist, vorzugsweise zwischen 2 und 10 liegt.

6. Gehäuse (2) nach einem der vorstehenden Ansprüche, **dadurch gekennzeichnet, dass** der Verlauf des Querschnitt des Kanals (20) zwischen der Einlassöffnung (201) und dem Hals (204) strikt monoton abnimmt.

7. Gehäuse (2) nach einem der vorstehenden Ansprüche, **dadurch gekennzeichnet, dass** es umfasst:

   - eine ringförmige äußere Wand (31), die von stromaufwärts nach stromabwärts aufgeweitet ist,
   - eine radial innere Wand (32), die sich ab der äußeren Wand (31) stromabwärts erstreckt und eine radial innere Dichtungsvorrichtung (4) trägt,
   - eine radial äußere Wand (33), die sich ab der äußeren Wand (31) erstreckt, und
   - eine Endwand (34), die die jeweiligen stromabwärts gelegenen Enden der radial inneren Wand (32) und der radial äußeren Wand (33) verbindet, wobei sich diese Endwand (34) in einer zur Längsachse (X-X') senkrechten Ebene (P1) erstreckt,

   dass die aufgeweitete ringförmige äußere Wand (31), die radial innere Wand (32), die radial äußere Wand (33) und die Endwand (34) gemeinsam einen ringförmigen inneren Hohlraum (35) begrenzen,
   dass der Kanal (20) zumindest teilweise in diesem inneren Hohlraum (35) angeordnet ist
   und dass die Austrittsöffnung (202) des Kanals (20) in der Endwand (34) ausgebildet ist.

8. Gehäuse (2) nach Anspruch 7, **dadurch gekennzeichnet, dass** die Einlassöffnung (201) in der aufgeweiteten ringförmigen äußeren Wand (31) ausgebildet und rechteckig ist.

9. Gehäuse (2) nach Anspruch 7, **dadurch gekennzeichnet, dass** die Einlassöffnung (201) des Kanals (20) ein Rohr (201a) mit kreisförmigem Querschnitt umfasst, das axial und nach stromaufwärts ab der aufgeweiteten ringförmigen äußeren Wand (31) vorsteht.

10. Gehäuse (2) nach einem der Ansprüche 7 bis 9, **dadurch gekennzeichnet, dass** es eine ringförmige Wand (36) umfasst, die sich axial ab der radial äußeren Wand (33) nach stromabwärts erstreckt und eine radial äußere Dichtungsvorrichtung (5) trägt.

11. Gehäuse (2) nach einem der Ansprüche 7 bis 10, **dadurch gekennzeichnet, dass** die Endwand (34) mindestens ein Entstaubungsloch (340) umfasst.

12. Gehäuse (2) nach einem der vorstehenden Ansprüche, **dadurch gekennzeichnet, dass** die Auslassöffnung (202) rechteckig ist.

13. Hochdruckturbine (14) einer Turbomaschine (1), die mindestens eine Rotorschaufelscheibe (140) mit einer Nabe (141) umfasst, **dadurch gekennzeichnet, dass** sie ein Gehäuse (2) zum Einleiten von Kühlluft nach einem der vorstehenden Ansprüche umfasst und dass das Gehäuse (2) stromaufwärts von der Rotorscheibe (140) derart angeordnet ist, dass sich seine Auslassöffnungen (202) gegenüber der Nabe (141) befinden.

14. Turbomaschine (1), **dadurch gekennzeichnet, dass** sie mindestens ein Gehäuse (2) zum Einleiten von Kühlluft nach einem der Ansprüche 1 bis 12 umfasst.

15. Verfahren zur Herstellung eines Gehäuses zum Einleiten von Kühlluft (2) nach einem der Ansprüche 1 bis 12, wobei das Gehäuse zum Einleiten von Kühlluft (2) durch additive Fertigung hergestellt wird.

**Claims**

1. A casing (2) for injecting cooling air into a bladed rotor disc of a turbine, in particular a high-pressure turbine of a turbomachine,

   the casing extending around a longitudinal axis (X-X') and being traversed by at least one channel (20) forming an air injector, the channel (20) comprising an inlet mouth (201) and an outlet mouth (202),
   **characterized in that** the channel (20) comprises a primary section (203) which extends in an axial plane (P) from the inlet mouth (201) to a bend (206) and a secondary section (207) which extends from this bend (206) to the outlet mouth (202), the secondary section (207) having a progressive variation of its orientation according to a tangential component (Z) between the section (Φ206) of the bend (206) and the outlet section (Φ202) of the outlet mouth (202),
   **in that** the channel (20) has a reduction in cross-section between the inlet cross-section (Φ201) of the inlet mouth (201) and the cross-section (Φ204) of a neck (204),
   and **in that** the channel (20) has at least one undulation (205) in its primary section (203), so that the outlet mouth (202) is located closer to the longitudinal axis (X-X') than the inlet mouth (201).

2. The casing (2) according to claim 1, **characterized in that** said at least one corrugation (205) of the channel (20) comprises, from upstream to downstream with respect to the direction of air flow in the channel (20), a first curved portion (205a) whose concavity is oriented towards the longitudinal axis (X-X') and then a second curved portion (205b) whose convexity is oriented towards the longitudinal axis (X-X').

3. The casing (2) according to claim 1 or 2, **characterized in that** the outlet mouth (202) of the channel (20) has an outlet section (Φ202) which extends tangentially and in a plane (P1) perpendicular to the longitudinal axis (X-X').

4. The casing (2) according to claim 3, **characterized in that** the elbow (206) is oriented so that the air flow exiting from the outlet mouth (202) flows tangentially in the same direction as the direction of rotation of the rotor disc to be cooled.

5. The casing (2) according to any one of the preceding claims, **characterized in that** the ratio between the inlet cross-section (Φ201) of the inlet mouth (201) and the cross-section (Φ204) of the neck (204) is greater than or equal to 2, preferably between 2 and 10.

6. The casing (2) according to any one of the preceding claims, **characterized in that** the evolution of the cross-section of the channel (20) between the inlet mouth (201) and the neck (204) is strictly monotonically decreasing.

7. The casing (2) according to any one of the preceding claims, **characterized in that** it comprises:

   - an annular outer wall (31) flared from upstream to downstream,
   - a radially inner wall (32) extending downstream from said outer wall (31) and supporting a radially inner sealing device (4),
   - a radially outer wall (33) extending from said outer wall (31), and
   - an end wall (34) which joins the respective downstream ends of the radially inner wall (32) and the radially outer wall (33), this end wall (34) extending in a plane (P1) perpendicular to the longitudinal axis (X-X'),

      **in that** the flared annular outer wall (31), the radially inner wall (32), the radially outer wall (33) and the end wall (34) together delimit an annular inner cavity (35),
      **in that** the channel (20) is arranged at least partly in this inner cavity (35),
      and **in that** the outlet mouth (202) of the channel (20) is formed in the end wall (34).

8. The casing (2) according to claim 7, **characterized in that** the inlet mouth (201) is formed in the flared annular outer wall (31) and is rectangular in shape.

9. The casing (2) according to claim 7, **characterized in that** the inlet mouth (201) of the channel (20) comprises a tube (201a) of circular cross-section, which projects axially and upstream from said flared annular outer wall (31).

10. The casing (2) according to one of claims 7 to 9, **characterized in that** it comprises an annular wall (36) which extends axially downstream from said radially outer wall (33) and which supports a radially outer sealing device (5).

11. The casing (2) according to one of claims 7 to 10, **characterized in that** said end wall (34) comprises at least one dust removal hole (340).

**12.** The casing (2) according to any of the preceding claims, **characterized in that** the outlet mouth (202) is rectangular in shape.

**13.** A high-pressure turbine (14) for a turbomachine (1) comprising at least one bladed rotor disc (140) fitted with a hub (141), **characterized in that** it comprises a cooling air injection casing (2) according to any one of the preceding claims and **in that** the casing (2) is arranged upstream of the rotor disc (140) so that its outlet mouths (202) are located opposite the hub (141).

**14.** A turbomachine (1) **characterized in that** it comprises at least one cooling air injection casing (2) according to any one of claims 1 to 12.

**15.** A method of manufacturing a cooling air injection casing (2) according to any one of claims 1 to 12, wherein said cooling air injection casing (2) is produced by additive manufacturing.

**FIG. 1**

A

F

D

C

E

F

G

H

B

**FIG. 2**

1

10

11

12

13

142

15

141

X

X'

140

14

# FIG. 3

## FIG. 4

## FIG. 5

## FIG. 6

## FIG. 7

**FIG. 8**

**FIG. 9**

## FIG. 10

## FIG. 11

## FIG. 12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2841591
- FR 2937371
- FR 3101670
- US 20200240279 A
- WO 2019180365 A